# EUROPÄISCHE PATENTANMELDUNG

(11) **EP 1 306 813 A2**
(43) Veröffentlichungstag der Anmeldung: **02.05.2003**
(21) Anmeldenummer: 02008805.0
(22) Anmeldetag: 19.04.2002
(51) Int. Cl.: G07B 17/00

(54) **Verfahren und Vorrichtung zur automatisierten Bestimmung von Postgebühren**

(30) Priorität: 29.10.2001 KR 2001066730
(71) Anmelder: Samkyung C&C Co.,LTD., Goyang City, Kyunggi-Do, 411-722 (KR)
(72) Erfinder: Kim, Dongsu, Sungbuk-gu, Seoul, 136-753 (KR); Jo, Yongeun, Bulkwang-3-Dong 391-22 Eunpyung-Gu Seoul (KR); Lee, Kwonho, Hwagok-5-Dong 1003-8, Kangseo-Gu, Seoul (KR); Park, Gyuntaek, Shincheon-Dong 17-2, Songpa-Gu, Seoul (KR); Cha, Jeonghwa, 24/5 Dongjak-gu, Seoul 156-825 (KR); Kang, Tae Jin, Dr., Seoul Nat. Univ., 151-742 Seoul (KR)
(74) Vertreter: Haber, Jan Wilhelm

(57) **Zusammenfassung**

Verfahren zur automatisierten Feststellung der Abmessungen einer einzelnen für eine Versendung vorgesehenen Postsendung, insbesondere eines Päckchens oder eines Paketes, wobei die Postsendung in eine Aufgabekammer einer dafür vorgesehenen Vorrichtung eingegeben wird, wobei anhand der Abmessungen Portogebühren errechnet werden, die vom Nutzer über eine Kassiereinrichtung zahlbar sind, wobei von einer Bilderzeugungseinrichtung Bilder von der in die Aufgabekammer eingebrachten Postsendung aus zwei verschiedenen Perspektiven aufgenommen werden und wobei aus den Bildern die Abmessungen in den drei Dimensionen berechnet werden.

## Beschreibung

Die vorliegende Erfindung betrifft ein Verfahren zur automatisierten Feststellung der Abmessungen einer einzelnen für eine Versendung vorgesehenen Postsendung, insbesondere eines Päckchens oder eines Paketes, wobei die Postsendung in eine Aufgabekammer einer dafür vorgesehenen Vorrichtung eingegeben wird, wobei anhand der Abmessungen Portogebühren errechnet werden, die vom Nutzer über eine Kassiereinrichtung zahlbar sind. Die Erfindung betrifft gleichfalls eine Vorrichtung zur Umsetzung des Verfahrens.

Bei der Erfindung handelt es sich um einen "intelligenten" Postbearbeitungsautomaten, der einen Postschalterbeamten ersetzen kann, indem er Postdienste, wie die Bearbeitung von Standardpost, von Einschreiben, von Eilpost, von Auslandspost oder den Wertmarkenverkauf unter Einsatz elektronischer Geräte bewerkstelligt. Aus dem Stand der Technik, beispielsweise aus der DE 199 00 512 A1 sind solche Automaten bekannt. Gattungsgemäße Automaten sind in einigen Industrieländern, bereits seit Mitte der 90er Jahre eingeführt. Nachteilig an den bekannten Automaten ist allerdings, daß sie für die Berechnung der Gebühren von Paketpost nur bedingt taugen. Während die Abmessungen flacher Briefe mit den verwendeten Bildaufnahme-Systemen relativ genau ermittelt und in die Berechnung einbezogen werden können, ist eine exakte Erfassung der dreidimensionalen Ausdehnung von Paketen kaum oder nur unter großem Aufwand möglich.

So wird bekanntermaßen zur Ermittlung der Postgebühr ein Lichtsensor verwendet, der nach dem Auflegen des Postgutes die zur Berechnung der Gebühren belegte Fläche ermittelt. Diese Art der Untersuchung ist aufwendig und ungenau. Darüber hinaus kann dieser Automat, wie dargelegt, nicht die Kantenhöhe und die Breite des Postgegenstands errechnen. Eine Bestimmung der Kantenhöhe können die bekannten Automaten nicht bewerkstelligen. Zudem kann ein solcher Automat keine auf Paketen und Einschreiben aufgeklebten Barcode-Etiketten lesen und somit auch keine Pakete und Einschreiben annehmen. Die bekannte Vorrichtung kann daher lediglich einfache Postgegenstände, wie Briefe und Postkarten, befördern und ist in seiner eingeschränkten Funktion vergleichsweise kostenaufwendig.

Aufgabe der vorliegenden Erfindung ist es daher, ein Verfahren und eine in seinen Funktionen flexible Vorrichtung zur automatisierten Annahme und Bewertung von Postsendungen zu schaffen, wobei das Verfahren und die Vorrichtung mit einfachen und kostengünstigen Mitteln umsetzbar sind und dabei eine zuverlässige und exakte Bewertung verschiedenartiger Postsendungen ermöglichen.

Diese Aufgaben werden durch ein Verfahren mit den kennzeichnenden Merkmalen des Anspruch 1 und eine Vorrichtung nach Anspruch 5 gelöst.

Der erfindungswesentliche Grundgedanke liegt zunächst darin, die aufgegebene Postsendung in ihrer Dreidimensionalität zu untersuchen. Das wird dadurch möglich, daß eine Bilderzeugungseinrichtung mehrere Bilder von der in die Aufgabekammer eingebrachten Postsendung aus mindestens zwei verschiedenen Perspektiven aufnimmt und daß aus den Bildern die Abmessungen in den drei Dimensionen berechnet werden. Die verschiedenen Perspektiven können dabei durch ein Verschwenken nur einer Kammera und der zeitlich versetzten Aufnahme der Bilder erzeugt werden. Es ist jedoch besonders vorteilhaft, die Bilder möglichst zeitgleich mit mindestens zwei stationär innerhalb der Vorrichtung installierten Kammeras, insbesondere mit elektronischen CCD Kammeras, aufzunehmen.

Zusammenfassend funktioniert die Bewertung der Postsendung folgendermaßen: Der "intelligente" Postbearbeitungsautomat errechnet die Größe der willkürlich in das Annahme-Fenster gelegten Postsendung automatisch, indem er sie mit zwei CCD-Kameras fotografiert. Sollte beispielsweise bei einem Brief die Kantenhöhe des Postgegenstands nicht benötigt werden, ist es vorteilhaft und kostengünstig, die Größe der Sendung mittels lediglich einer zentral angebrachten CCD-Kamera zu ermitteln. Das von den Kameras aufgenommene Bild kann in einem Hauptrechner, der die Berechnung vornimmt, gespeichert werden, um im Fall von Beanstandungen und Störfällen eine Dokumentation vorweisen zu können.

Für die Berechnung der Dimensionen einer der Postsendung ist eine Kalibrierung beider Kameras erforderlich, die vorteilhafter Weise anhand eines als Maßstab ausgebildeten Standards vorgenommen wird. Ein solcher Maßstab kann stationär in der Vorrichtung installiert sein oder bei Bedarf in die Vorrichtung eingebracht werden. Somit kann die geometrische Beziehung zwischen den Koordinatensystemen der Kameras ermittelt werden. Der Ursprung der Koordinatensysteme liegt vorteilhafter Weise in den Linsenzentren oder in einem Koordinatensystem auf der Postannahme-Plattform. Der Ursprung kann auch ein bekannter Punkt auf einem Kalibrierungs-Bezugsobjekt (Standard) sein. In einer vorteilhaften Ausführungsform weist dieser Standard zwei Flächen auf, die insbesondere in einen Winkel von 90° gegeneinander geneigt angeordnet sind, wobei auf den Flächen jeweils ein Raster oder ein Gitter angeordnet ist und wobei die Linien einen einheitlichen Abstand aufweisen. Mit einem solchen Maßstab, der in die Vorrichtung bei Bedarf einlegbar ist, kann die Messung der Dimensionen durch die Kammeras kalibriert werden.

So funktioniert der Automat derart, daß der Kunde das Postgut auf die Annahme-Plattform des Systems legt, wobei sämtliche Dienste durch einen Dialog über einen Bildschirm (Touch-Screen) und eine Lautsprecherstimme gesteuert werden. Über das erfindungsgemäße Fotografieren und Wiegen der Postsendung berechnet das System die Postgebühr automatisch. Nachdem der Kunde mit Münzen, Banknoten oder Geldkarte bezahlt hat, werden Briefmarken- und/oder Barcode-Etiketten ausgegeben. Der Kunde bringt dann die Briefmarken- und/oder Barcode-Etiketten am Postgegenstand an und legt diesen erneut auf die Annahme-Plattform des Systems, woraufhin das System die Postsendung automatisch annimmt und nach einer Kontrolle automatisch zur Aufbewahrung in den Postsack des Systems befördert.

Diese Funktion "Rechnung - Zahlung / Annahme" wird durch Fotografieren des Überweisungspapiers und einer optische Zeichenerkennung realisiert. Bei Zahlung der Rechnung durch den Kunden gibt das System eine gestempelte Quittung aus, während eine weitere Quittung im System verbleibt. Die Daten der durchgeführten Bearbeitung werden in der Datenbank des Hauptrechners gespeichert. Soweit es erforderlich ist, werden alle Daten über Bearbeitungsvorgänge automatisch zur Datenbank eines Hauptrechners übermittelt. Die Funktion "Briefmarkenverkauf" wird durch Ausgabe von Briefmarken oder anderer Etiketten, die in der Maschine gedruckt werden, und durch die Entgegennahme des Geldbetrages realisiert. Das System arbeitet 24 Stunden rund um die Uhr und bietet dem Kunden ein hohes Maß an Annehmlichkeiten. Es hat somit Potential zu einer hohen Wertschöpfung.

Vorteilhafter Weise ist der Postbearbeitungsautomat in der Lage, das Barcode-Etikett mittels einer eingebauten Barcode-Lesevorrichtung zu lesen, wobei die Vorrichtung zum effizienteren Lesen des Barcodes um 180° gedreht werden kann. Das Ergebnis wird in der Datenbank für Bearbeitungsvorgänge gespeichert und auf der Quittung ausgedruckt. Dabei kann der Postbearbeitungsautomat die Übereinstimmung zwischen Etikett-Aufkleber und Menüauswahl des Kunden beurteilen. Der Automat realisiert gegebenenfalls weitere Funktionen, wie eine "Überweisungsannahme-Funktion" zur Zahlung der Rechnung. Dazu ist der Automat mit einem Scanner zur Ablichtung des Überweisungspapiers sowie einer OCR-Vorrichtung, einem Stempeldrucker und einer Beförderungs- sowie Aufbewahrungsvorrichtung für die Überweisungspapiere ausgestattet. Die genannte Funktion bietet für den Kunden größere Vorteile als nur die reine Annahme der Postsendungen. Ferner können die Kunden rund um die Uhr Überweisungen mit dem System, das damit die Funktion einer Bank realisiert, vornehmen.

Außerdem kann in die Vorrichtung ein Drucker mit Steuervorrichtung integriert sein, der auf fälschungssicherem Druckpapier beliebige Formen und vielfältige Schriftarten drucken kann. Der Kunde kann somit über eine Funktion "Briefmarkenverkauf" beliebige Arten und Mengen von Briefmarken kaufen. Die Briefmarkenverkaufs-Funktion macht das System profitabel. Auch wenn jedes Land unterschiedliche Briefmarken hat, so können auf einfache Weise technische Anpassungen des Druckers vorgenommen werden, um den Unterschieden Rechnung zu tragen. Weiterhin weist die Vorrichtung vorteilhafter Weise einen Drucker zur Erstellung des Barcode-Etiketts und eine Etikettenausgabe-Vorrichtung auf. Damit kann ein Barcode-Etikett für Pakete und Einschreiben gedruckt und ausgegeben werden. Zum Sammeln des Postgutes weist die Vorrichtung einen integrierten Postsack auf, der über eine automatische Vorrichtung zur Beförderung der Postsendungen befüllt wird.

In einer besonders vorteilhaften Form weist die Vorrichtung außerdem ein Notruf-Telefon zum Herbeiholen von Hilfe auf. Diese Einrichtung bietet sich an, da die Postaufgabevorrichtungen stark verbreitet an zentralen Stellen aufgestellt werden. Dabei steht für den Kunden ein Telefon zur Benutzung bereit. Auch im Fall von Irrtümern kann der Kunde einen Anruf tätigen und einen Systemverwalter um Hilfe bitten. Der "intelligente" Postbearbeitungsautomat besitzt außerdem einen Extra-Monitor für Werbung, der für Postwerbung und andere Zwecke benutzt werden kann.

Ein Ausführungsbeispiel der Erfindung ist in den Figuren 1 bis 6 dargestellt und wird nachfolgend näher beschrieben. Es zeigen:
- **Figur 1**: eine Ansicht der Vorrichtung,
- Figur 2: eine Ansicht und einen Schnitt des Aufgabeteiles,
- Figur 3: einen frontalen Schnitt durch den Aufgabe- und Sammelteil,
- Figur 4: ein Flußdiagramm veranschaulichend die Größenmessung,
- Figur 5: ein Flußdiagramm veranschaulichend die Kalibrierung der Kameras und
- Figur 6: ein Flußdiagramm veranschaulichend die Aufgabe von Einschreiben.

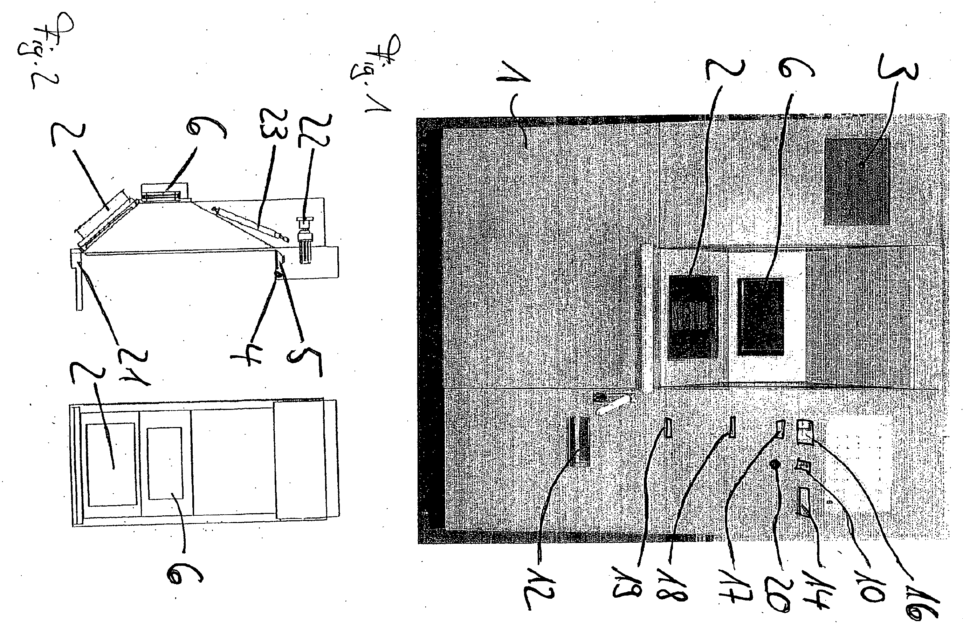

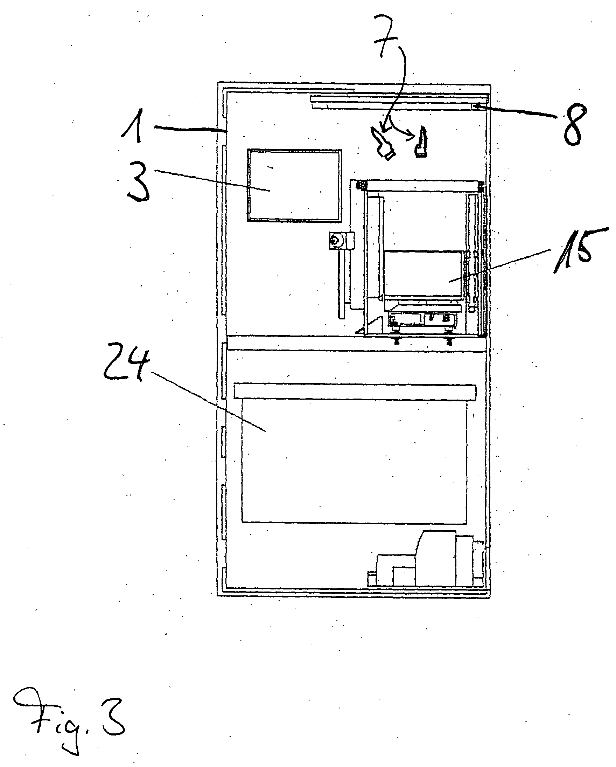

In Figur 1 ist eine Vorrichtung zur Aufgabe von Postsendungen gezeigt, bei der sämtliche Komponenten in einem gemeinsamen Gehäuse 1 angeordnet sind. Bei Nichtbenutzung befindet sich das System in einer Energiesparfunktion, wobei auf dem System-Hauptbildschirm 2 ein Bildschirmschutz-Programm läuft und der oben links befindliche Extra- Monitor 3 Werbung zeigt. Sobald ein Kunde das System betritt, stoppt das Bildschirmschutzprogramm, ausgelöst durch einen Infrarot-Fühler 4 (Figur 2) und eine Stimme aus einem Lautsprecher 5 begrüßt den Kunden mit dem Wort: "Willkommen". Daraufhin erscheint auf dem Haupt-Monitor 2 das Startmenü. Die in der Schlange wartenden Kunden können sich in der Zwischenzeit Filme auf einem Extra-Bildschirm 3 ansehen.

Der Kunde wählt nun das Dienstmenü, das seine Postsendung in das System befördert. Beim Drücken der Menütaste erscheint auf dem Haupt-Monitor 2 die Aufforderung: "Bitte legen Sie Ihre Postsendung auf die Plattform", wobei auch über den Lautsprecher 5 eine entsprechende Sprachnachricht zu hören ist. In diesem Augenblick öffnet sich automatisch das Annahme-Fenster 6 zur Entgegennahme der Postsendung in die Bewertungsöffnung 15. Sobald der Kunde die Postsendung auf die Plattform legt und seine Hand sich außerhalb des Fensters befindet, schließt sich das Annahme-Fenster 6 automatisch. Dabei kommt der Motor des automatischen Fensters zur Sicherheit des Kunden zum Stillstand, falls der Sicherheitssensor 4 ein in der Nähe der Plattform befindliches Objekt identifiziert.

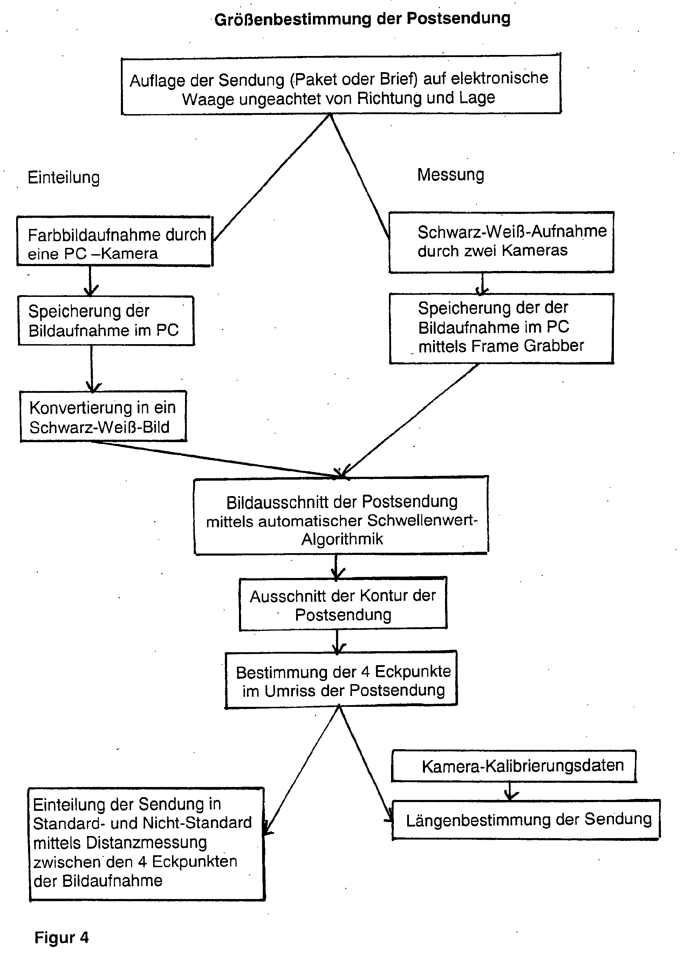

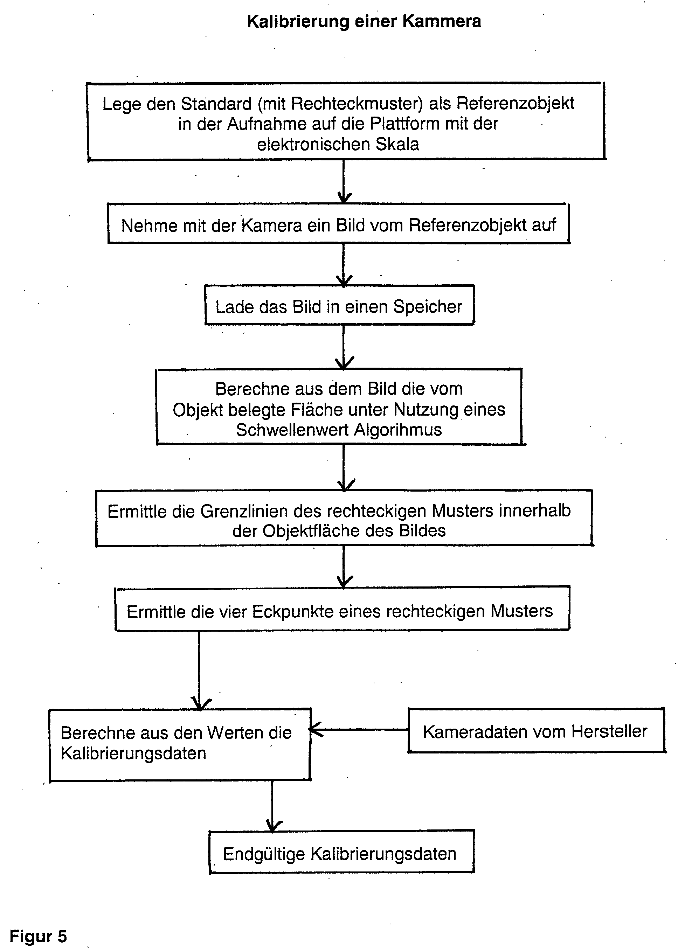

Das System ermittelt nun Gewicht und Größe der Postsendung mit Hilfe einer Waage und der beiden erfindungsgemäßen CCD-Kameras 7 (Figur 3). Das Bild wird im Speicher des Hauptrechners gespeichert und daraufhin untersucht, ob es sich um ein Standard-Bild handelt oder nicht. Zum Fotografieren des Postgegenstands ist oben am Gehäuse eine Fluoreszenzlampe 8 angebracht. Das System errechnet die Postgebühr mittels Wiegen und durch Stereo-Fotografie des Postgegenstands, wonach die Postgebühr auf dem Haupt-Monitor 2 angezeigt wird. Ein Flußdiagramm, das den Ablauf der Größenbestimmung veranschaulicht, ist in Figur 4 gezeigt. Dabei erklärt sich das beschriftete Diagramm, auf dessen Inhalt hier explizit Bezug genommen wird, selber. Die Kalibrierung eine Kammera ist ebenfalls in einem Flußdiagramm (Figur 5) gezeigt. Auch dieses beschriftete Diagramm, auf dessen Inhalt hier ebenfalls explizit Bezug genommen wird, erklärt sich selber.

Die Bezahlung der Gebühr erfolgt mit Münzen, Banknoten oder Kreditkarten im Anschluss an die Bestätigung der Postgebühr durch den Kunden. Das System beinhaltet dazu eine Münzannahme, eine Münzausgabe, eine Banknoten-Annahme, eine Banknotenausgabe sowie ein Kreditkarten-Lesegerät.

Der Kunde wirft die Münzen in den Münzeinwurfschlitz 10 oben rechts ein, die dann von der Münzannahme überprüft und angenommen werden. Die Münzannahme erkennt die Währung und verformte Münzen. Bei Einwurf einer verformten Münze wird sie durch die Münzausgabe-Vorrichtung 12 wieder ausgegeben. Eine nicht beschädigte Münze wandert zur Weiterverarbeitung in eine Vorrichtung, die auch das Wechselgeld beinhaltet. Diese ist mit einem Sensor ausgestattet, so daß innerhalb des Netzwerks einem Systemverwalter das Signal ("voll" / "zu wenig Wechselgeld") übermittelt werden kann.

Der Kunde kann auch eine Banknote in den Banknoteneinzug 14 einführen, die dann von der Banknotenannahme 9 überprüft und angenommen wird. Die Banknoten-Annahmevorrichtung erkennt die Banknotenart, auch Fälschungen, und übermittelt diese Information zur Kontrollvorrichtung 15. Verformte oder gefälschte Banknoten werden von der Banknotenausgabe wieder ausgegeben. Der Banknoten-Behälter besitzt einen Meldesensor, ob der Behälter gefüllt ist oder nicht. Bei vollem Behälter übermittelt das System über das Netzwerk ein Signal an den Systemverwalter. Die Banknotenausgabe gibt Banknoten als Wechselgeld heraus. Nach Einführung einer Geldkarte in die Karteneinzugsöffnung 16 wird diese sie von einem Lesegerät gelesen und die angezeigte Gebühr abgebucht. Sämtliche Bearbeitungsvorgänge werden im Hauptrechner gespeichert. Bei Mißlingen des Vorgangs zeigt der Menü-Bildschirm 2 den Grund hierfür an und die Geldkarte wird ausgegeben. Außerdem zeigt die Vorrichtung Ausgaben von Luftpostaufklebern 17, Paketausgaben 18 und Quittungen 19. Mit dem Knopf 20 kann ein Geldwechsel eingeleitet werden. In Figur 2 ist eine Ablage 21, eine Beleuchtung 22 und ein Schocksensor 23 zu erkennen.

Sobald der Kunde die Postgebühr bezahlt hat, gibt das System einen vom Drucker gedruckten Aufkleber heraus. Für das Drucken von Aufklebern wird selbstklebendes Papier in einer Rolle bereitgestellt. Der Aufkleber gibt zudem die Postgebühr und die Versandart an. Nach Drucken aller Daten wird dieses Aufklebers abgetrennt und als Briefmarkenersatz ausgegeben. Nach dem Druckvorgang wird die Quittung abgetrennt und ausgegeben.

Das Annahme-Fenster 6 öffnet sich bei Ausgabe der Briefmarken- und Barcode-Aufkleber automatisch. Der Kunde nimmt das Postgut heraus, klebt beide Aufkleber darauf und legt es erneut in die Annahme-Öffnung 6. Bei erneutem Einlegen des Postgutes in die Annahme 6 schließt sich das Fenster. Nocheinmal wird durch Wiegen und Fotografieren wird die Postgebühr des Postgutes berechnet. Wenn das nun eingelegte Postgut nicht identisch ist mit dem vorherigen Objekt ohne Briefmarken- und Barcode-Etiketten, erscheint auf dem Hauptmenü-Bildschirm 2 eine Fehlermeldung und gleichzeitig fordert eine Lautsprecherstimme dazu auf, die Postsendung herauszunehmen. Wird diese als identisch erkannt, wandert es in einen Postsack. Die fotografische Aufnahme des Postgegenstands wird in der Datenbank des Hauptrechners gespeichert und kann zu Beweiszwecken bei Störfällen herangezogen werden.

Auf Wunsch können die Sendungen in Kategorien eingeteilt und in verschiedene Aufbewahrungs-Vorrichtungen befördert werden. Im allgemeinen werden Sendungen in Standardpost und Eilpost eingeteilt. Der Kunde kann den entsprechenden Dienst auswählen. Mitunter finden sich auf Paketsorten bereits vor der Abwicklung Barcode-Etiketten. Dann liest das Barcode-Lesegerät diesen Code und identifiziert die Postdienste automatisch, woraufhin alle Daten in der Datenbank des Hauptrechners gespeichert werden. Die Barcode-Lesevorrichtung ist an der Annahme-Plattform 21 angebracht.

Ferner besitzt eine vorteilhafte Variante des Systems eine "Bank"-Funktion zur Zahlung von Rechnungen. Der Kunde legt eine Zahlungsaufforderung zum scannen in einen Überweisungseinzug. Das gescannte Bild wird an den Hauptrechner weitergeleitet, der die Überweisungsnummer, Überweisungsinstitut, Betrag und das Fälligkeitsdatum aufzeichnet. Diese Daten werden auf dem Monitor angezeigt und der Kunde zahlt nach Bestätigung den entsprechenden Betrag in bar oder mit Karte. Nach Abschluss des Zahlungsvorgangs wird das eingeführte Überweisungspapier von einem Drucker gestempelt.

Teil der Sicherheitsmaßnahmen des Systems stellen die Sensoren dar, die dem Systemverwalter Systemschäden melden. Wenn beispielsweise das Gehäuse 1 des Systems beschädigt wird und jemand versucht, das Hauptfenster zu öffnen, wird durch einen Schock-Sensor 23 und Fenster-Sensor ein Alarm ausgelöst, der an den Systemverwalter übermittelt wird. Aus Gründen einer einfachen Wartung können sämtliche Peripherie-Einheiten des Systems abgetrennt werden. Die vom System angenommenen Sendungen sind von einem Postangestellten einzusammeln und regelmäßig in eine zentrale Poststelle zu bringen. Ein Systemverwalter vergleicht dann die Daten aller Bearbeitungsvorgänge mit der gesammelten Geldmenge.

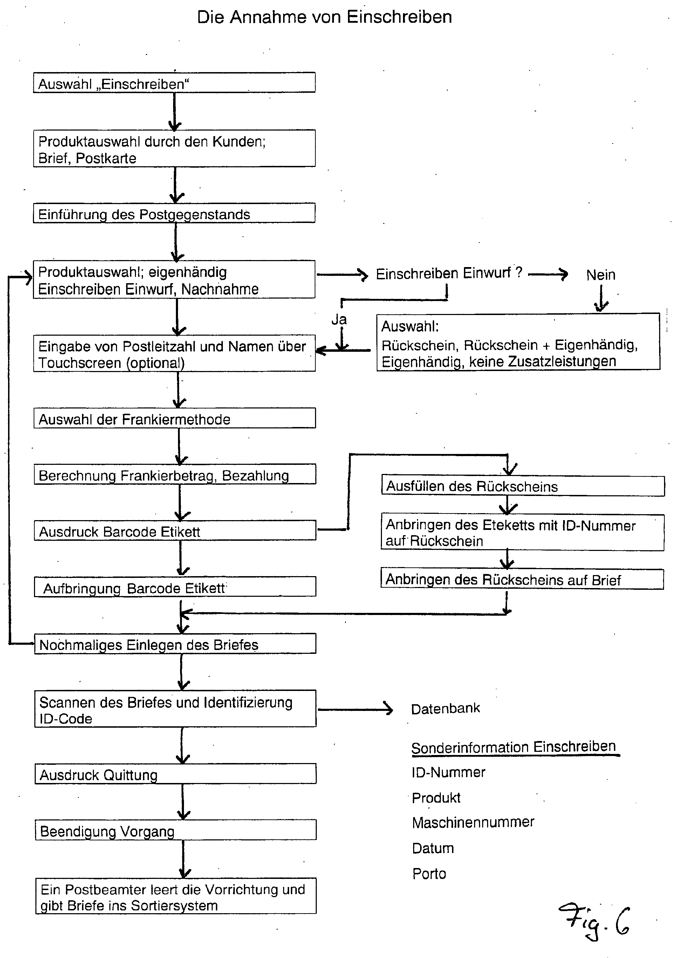

In Figur 6 ist noch ein selbsterklärendes Flußdiagramm gezeigt, das den Prozeß bei Aufgabe eines Einschreibens zeigt. Auf den Inhalt wird explizit Bezug genommen.

## Patentansprüche

1. Verfahren zur automatisierten Feststellung der Abmessungen einer einzelnen für eine Versendung vorgesehenen Postsendung, insbesondere eines Päckchens oder eines Paketes, wobei die Postsendung in eine Aufgabekammer einer dafür vorgesehenen Vorrichtung eingegeben wird, wobei anhand der Abmessungen Portogebühren errechnet werden, die vom Nutzer über eine Kassiereinrichtung zahlbar sind,
**dadurch gekennzeichnet**, daßvoneiner Bilderzeugungseinrichtung aus zwei verschiedenen Perspektiven Bilder von der in die Aufgabekammer eingebrachten Postsendung aufgenommen werden und daß aus den Bildern die Abmessungen in den drei Dimensionen berechnet werden.

2. Verfahren nach Anspruch 1,
**dadurch gekennzeichnet, daß** die Bilder von zwei stationär innerhalb der Vorrichtung angebrachten elektronischen Kammeras, insbesondere von CCD Kammeras, aufgenommen werden.

3. Verfahren nach Anspruch 1 oder 2,
**dadurch gekennzeichnet**, daßdieDimensionenim Vergleich zu einem Standard berechnet wird, der als Maßstab dient und der in zumindest ein Bild eingeblendet wird oder der in die Vorrichtung einsetzbar ist.

4. Verfahren nach Anspruch 3,
**dadurch gekennzeichnet**, daßderStandardzweiFlächen aufweist, die um insbesondere einen Winkel von 90° gegeneinander geneigt angeordnet sind und auf denen jeweils ein Raster oder ein Gitter angeordnet ist, wobei die Linien einen einheitlichen Abstand aufweisen.

5. Verfahren nach einem der vorherigen Ansprüche,
**dadurch gekennzeichnet**, daßdasGewichtder Postsendung ermittelt und neben der Abmessung als Parameter in die Berechnung der Portogebühren einbezogen wird.

6. Vorrichtung zur automatisierten Aufgabe von Postsendungen, wie beispielsweise von Briefen und Paketen, insbesondere zur Umsetzung des Verfahrens nach einem der vorherigen Anspüche, aufweisend ein Gehäuse mit einer Aufgabeeinrichtung, in der Postsendungen wie Briefe oder Pakete, aufgebbar sind,
**gekennzeichnet durch** eine Bilderzeugungseinrichtung, die eine in die Aufgabeeinrichtung aufgegebene Postsendung aus zwei verschiedenen Perspektiven aufnimmt, wobei ein Computer aus den Bildern die Abmessungen der Postsendung in drei Dimensionen und unter Einbeziehung der Abmessungen das aufzuwendende Porto berechnet.

7. Vorrichtung nach Anspruch 6,
**dadurch gekennzeichnet, daß** die Bilderzeugungseinrichtung zwei insbesondere elektronische Kammeras aufweist, die die Postsendung aus zwei Blickwinkeln aufnehmen.

8. Vorrichtung nach einem der Ansprüche 6 bis 7,
**gekennzeichnet durch** ein Zahlungs-Eingabemittel, insbesondere zur Eingabe von Münzen, Geldscheinen und/oder Kreditkarten.

9. Vorrichtung nach einem der Ansprüche 6 bis 8,
**gekennzeichnet durch** eine Überweisungseinrichtung, mittels der Überweisungen vornehmbar sind, wobei der zu überweisende Betrag über das Zahlungs-Eingabemittel eingebbar ist.

10. Vorrichtung nach einem der Ansprüche 6 bis 9,
**gekennzeichnet durch** einem System zur Aufgabe und Weiterleitung von Einschreiben.
